# NEW EUROPEAN PATENT SPECIFICATION

(11) **EP 1 492 401 B2**
(45) Date of publication and mention of the opposition decision: **31.10.2012**
(45) Mention of the grant of the patent: 20.09.2006
(21) Application number: 03717841.5
(22) Date of filing: 04.04.2003
(51) Int. Cl.: A01K 1/12, A01J 5/017

(54) **METHOD AND ARRANGMENT AT A DAIRY FARM**
VERFAHREN UND ANORDNUNG FÜR EINEN AUF MILCHVIEHHALTUNG SPEZIALISIERTEN BAUERNHOF
PROCEDE ET AGENCEMENT MIS EN OEUVRE DANS UNE FERME PRODUISANT DU LAIT

(30) Priority: 09.04.2002 SE 0201075
(43) Date of publication of application: 05.01.2005
(73) Proprietor: DeLaval Holding AB, 147 21 Tumba (SE)
(72) Inventor: BJÖRK, Anders, S-147 41 Tumba (SE)
(74) Representative: Fritzon, Rolf
(86) International application number: PCT/SE2003/000546
(87) International publication number: WO 2003/086058

(56) References cited:
- EP-A1- 0 551 957
- EP-A1- 0 988 784
- EP-A2- 0 801 894
- WO-A1-01/17339
- WO-A1-01/93666
- WO-A1-95/35028
- WO-A1-96/03031
- WO-A1-96/03031
- WO-A1-96/19916
- WO-A1-99/25176
- WO-A1-99/63808
- US-A1- 2002 000 204
- 'Prospects for automatic milking' EAAP PUBLICATION 23 November 1992 - 25 November 1992, WAGENINGEN, NETHERLANDS,

## Description

### TECHNICAL FIELD OF THE INVENTION

The present invention relates generally to dairy farming and to milking of dairy animals therein.

Particularly, the invention relates to a method of automatically milking animals and an arrangement for managing milking animals.

### DESCRIPTION OF RELATED ART AND BACKGROUND OF THE INVENTION

In modern dairy farm industry there are continuous research and development activities in order to improve the efficiency of various activities such as machine milking, which, inter alia, involves increased milk yield and reduced milking time. A major trend in this respect is an increased degree of automation of the various activities. For instance, machine milking may be performed by milking robots in a completely automated manner. Such an automatic milking system may take care of milking, feeding, milk inspection, milk sampling, animal traffic, etcetera in a large area wherein the dairy animals are moving and are visiting the milking machine voluntarily.

A milking machine involves heavy expenditure and has a limited milk production capacity. Thus, animals having a high milk production should be allowed to be milked more often than animals having a low milk production. The operation and use of a milking machine, which animals are visiting on a voluntary basis, in order to obtain an optimum overall dairy farm performance is an arduous task. An objective is here to safeguard maximum milk production, while, naturally, ethical aspects as well as animal care are considered.

EP 0988784 (MAASLAND N.V.) discloses a method of automatically milking animals, which are allowed to visit individually a milking station comprising a milking robot and an animal identification system. An animal visiting the milking station is milked only if at least a specific number of milkings, Q, of other animals has taken place since the last milking of the relevant animal. The number Q is calculated as Q = c M / x, where x is an individual animal parameter indicating how often the relevant animal has to be milked, M is the total number of milkings performed by the robot, and c is a correction factor.

WO 01/93666 (DELAVAL HOLDING AB) discloses a method of automatically milking animals, such as cows, which are allowed to move freely in an area intended therefore and to visit individually a milking station comprising a fully automatic milking machine and an animal identification: system. The method includes the steps of assigning a milking qualification parameter to each of the animals that are allowed to move freely in said area; ranking the animals in accordance with their respective milking qualification parameters; and milking an animal, which presents itself at the milking station only if said animal is identified as belonging to the x highest ranked animals.

Further milking decision algorithms are disclosed in EP 0714232, EP 0714232, and EP 0639327 (all MAASLAND N.V.).

### SUMMARY OF THE INVENTION

The present inventor has discovered that a problem with the known kind of methods is that the animal traffic pattern in the area housing the animals and particularly the presence of animals in the surroundings of the milking station are not taken into account.

Occasionally there are no or very few animals present in the vicinity of the milking station, wherein it may happen that a milking animal almost qualified for milking visits the milking station and is refused to be milked despite there being no other animal qualified for milking present in the surroundings of the milking station. At other times there may be a large number of animals highly qualified for milking present outside the milking station, possibly awaiting to be milked, while an animal which is just qualified for milking visits the milking station and is admitted to be milked.

Thus, the utilization of the milking station is not optimum. In the former case the milking station remains unused, while being visited by an animal almost qualified for milking. In the latter case animals highly qualified for milking have to wait outside the milking station, while an animal just qualified for milking is milked. Some or all of the highly qualified animals may become tired and even leave the milking station area.

It is therefore an object of the present invention to provide a method of automatically milking animals, which are allowed to move in an area intended therefore and to visit individually a milking station including an automatic milking machine and an animal identification device, wherein each of said animals is given a milking priority and wherein each of said animals visiting the milking station is admitted to be milked automatically by said automatic milking machine depending on its milking priority, which method remedies the problems discussed above and thus provides for an optimum utilization of the milking machine and for an optimum milk production.

It is a further object of the invention to provide such an inventive method, which is efficient, reliable, of low cost, and easy to implement.

It is a yet further object of the present invention to provide an arrangement for managing milking animals, which remedies the problems discussed above and which is efficient, reliable, of low cost, and easy to implement

These objects among others are attained by methods and arrangements as claimed in the appended patent claims.

By means of counting the number of animals in a section of the area, in which the milking animals are allowed to move, where the section may house plurality of the animals and is located adjacent to said milking station, an animal identified when presenting itself at the milking station may be admitted to be milked automatically by the automatic milking machine depending on the detected number of animals in the section located adjacent to the milking station.

Various embodiments of the present invention are set out in the dependent claims.

Typically, the more animals present in the section located adjacent to the milking station, the higher milking priority is needed to be admitted to be milked. If the animals present in the section located adjacent to the milking station are identified, and their respective milking priorities are retrieved, typically, the higher the milking priorities are, the higher milking priority is needed to be admitted to be milked.

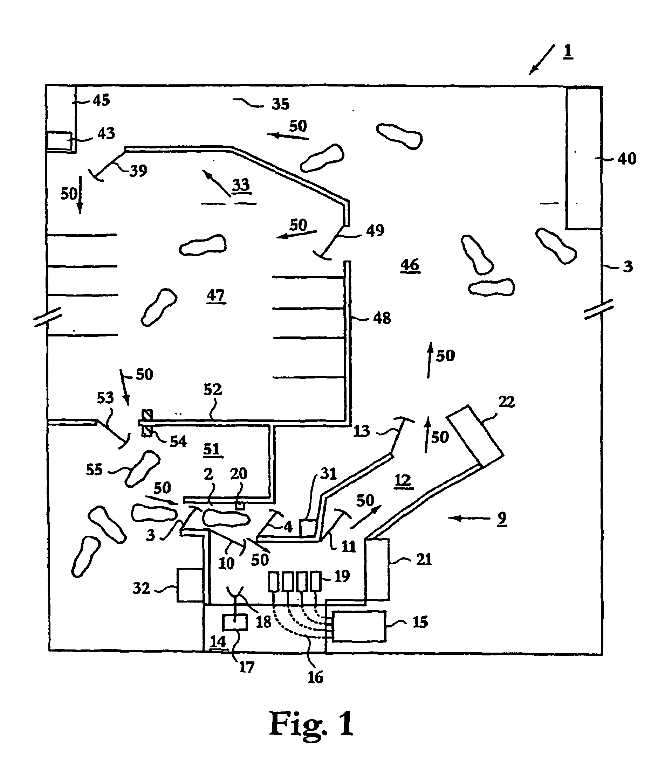

Further characteristics of the invention, and advantages thereof, will be evident from the detailed description of preferred embodiments of the present invention given hereinafter and the accompanying Figs. 1-3, which are given by way of illustration only, and thus are not limitative of the present invention.

In the following detailed description the milk producing animals are cows. However, the invention is not limited to cows, but is applicable to any animals having the capability of producing milk, such as sheep, goats, buffaloes, horses, etc.

### BRIEF DESCRIPTION OF THE DRAWINGS

Figs. 1-3 illustrate schematically areas for housing a herd of cows including arrangements for automatically milking the cows according to three preferred embodiments of present invention.

### DETAILED DESCRIPTION OF PREFERRED EMBODIMENTS

Fig 1. discloses an arrangement for housing a herd of freely walking cows, a so-called loose house arrangement. The arrangement comprises an area 1 defined by enclosure means 3 in the shape of a fence, a grid or the like. The area 1 may alternatively be a barn.

In area 1, there is provided a milking station 9 arranged for voluntary milking of the cows, i.e. the cows enter the milking station 9 in order to be milked when they want to. The milking station 9 comprises an enclosure having an entry gate 10 and an exit gate 11. Before, the entry gate 10 there may be provided a selection box 2 provided with an entrance gate 3 for entrance of cows and an exit gate 4 for exit of cows not allowed to pass through the entry gate 10.

Outside the exit gate 11 there may be an exit space 12 to be passed by the cow leaving the milking station. The exit space 12 comprises a further exit gate 13.

The milking station 9 comprises an automatic milking machine 14 connected to an end unit 15 by means of milk lines 16. The milking machine 14 includes an automatic handling device 17 having a robot arm 18 arranged to automatically apply teat cups 19 of the milking machine to the teats of a cow present in the milking station 9.

Furthermore, the milking station 9 comprises a cow identification device 20 provided to identify a cow presenting itself at the milking station 9. All of the gates 3, 4, 10, 11 and 13 are controllable by means of a schematically disclosed gate control device 31.

Further, automatic handling device 17, and the gate control device 31 are connected to a central processing and control device 32. (In an alternative version the gate control device 31 may be integrated in the central processing and control device 32.)

The central processing and control device 32 is responsible for central processing and controlling of the Fig. 1 arrangement, and comprises typically a microcomputer, suitable software, and a database of the cows in the area 1. The database includes for each cow an assigned and dynamically updated milking priority, which indicates the degree of appropriateness or suitability that the cow shall be milked, see further discussion below.

Thus a cow approaching the milking station 9 enters the selection box 2 through the gate 3 and is identified by the identification device 20. Depending on the milking priority of the cow, the entry gate 10 may be opened to give access to the milking machine 14 or the gate 4 may be opened so that the cow can leave the milking station 9 without being milked.

During milking, milk is drawn from the teats of the cow by means of vacuum being applied to the teat cups 19. The milk drawn is measured by means of one or several milk meters (not illustrated), whereafter it is collected in the end-unit 15. Each teat cup may be connected individually by means of the respective milk line 16 to the end unit 15, from which the milk is pumped to a cooled storage tank (not illustrated).

After the milking has been completed the exit gates 11 and 13 are opened and the cow may leave the milking station 9. The milking station 9 may comprise a first feeding device 21 provided in the front end of the milking station 9 and a second feeding device 22 provided in the front end of the exit space 12. A purpose of the first feeding device 21 is to entice the cow to enter the milking station 9 and to make her stand still during at least the attachment of the teat cups 19 and a purpose of the second feeding device 22 is to entice the cow to leave the milking station 9 after the milking has been finished or is interrupted for any reason. It is to be noted that the cow may alternatively be enticed to enter and leave the milking station 9 by other enticing means known in the art.

Furthermore, area 1 may house a feeding stall 33 accessible to the cows, which includes an enclosure having an entry 35 and an exit gate 39 and houses an automatic feeding device 45 arranged to offer concentrated feed (fodder) to the cows. The feeding stall 33 may comprise an identification device 43 provided to identify a cow entering the feeding station 33, and to offer concentrated feed (fodder) in an amount, which depends on the cow identified. After the feeding has been completed, the exit gate 39 is opened and the cow may leave the feeding station 9.

It shall be noted that the first area 1 may include a plurality of feeding supply stations, and separate solid and liquid supply stations (not illustrated). In Fig. 1 is schematically illustrated a feed device 40 for supplying solid and liquid feed, such as coarse fodder and water, to the cows.

The area 1 may be divided into a feeding area 46 and a resting area 47 by means of a fence 48, wherein cows in the resting area 47 have to pass the milking station 9 (through gate 4 or 13) in order to reach the feeding area 46. The fence 48 includes a one-way gate 49 for cows to pass when moving from the feeding area 46 to the resting area 47.

In Fig. 1 arrows 50 indicate schematically the movement of cows in the area 1, and particularly through the milking station 9 and the feeding station 33.

To each cow is assigned a milking priority parameter value, which indicates the degree of suitability from a milk production optimization viewpoint that the respective cow shall be milked, and only cows having a milking priority parameter value above a threshold value are qualified or admitted to be milked in the milking station 9, where the threshold value is either a fixed value or depends on the milking priority parameter values of the cows in the area 1. The latter case may be exemplified by a decision algorithm wherein only the twenty cows having highest milking priority parameter values are admitted to be milked; thus the threshold value is obviously set by the twentieth highest parameter value.

The milking priority parameter value of each of the cows is updated repeatedly and may typically depend upon the time elapsed since the cow was milked last; the longer time the higher milking priority parameter value. Since cows are different and produce different amounts of milk the milking priority parameter value may be dependent on other factors as well. Examples of such factors include the milk yield per unit time of the cow; the health of the cow and particularly the udder health of the cow; the milk produced by the cow (the cell count value, lactose, pH, conductivity, etc.); the udder filling level of the cow; the lactation period of the cow; whether the cow is giving suck to a suckling calf; the pattern of behavior of the cow; the activity of the cow; and the feed consumption of the cow.

In this respect particular reference is made to the documents cited in the prior art section, the content of which being hereby incorporated by reference.

Particular emphasizes ought to be put on the health of the cows while employing such milk optimization algorithms. They may cause increased somatic cell count values, which may depend on irregular or short milking intervals, limited feed supply and/or transmission of infections and other illnesses.

For instance, to maximize milk production, the milking intervals may be shorter than those that would be optimum to minimize the cell count value. It is believed that milk having low cell count values will in the future be better paid than milk having higher cell count values. Thus, there will be a further economic incitement to increase the milk quality. It is concluded that not only maximum milk production, but also cow health and milk quality should be considered when setting priority parameters.

In order not to limit the feed supply there may be an unlimited supply of coarse fodder or roughage in both the feeding area 46 and the resting area 47, while concentrated feed (fodder) is only supplied in the feeding area 46 to encourage the flow of cows through the milking station 9. Alternatively or additionally, the gate 49 may be capable of being opened in a reverse direction to allow cows to pass through there from the resting area 47 to the feeding area 46. Still alternatively, the fence 48 may be dispensed with to allow the cows to walk freely between the feeding and resting areas 46, 47.

It shall further be noted that the milking priorities may be specified in minutes left to achieve a milking permission or similar, which means that a lower figure indicates a higher priority.

According to the present invention there is provided an area 51, which is a portion only of the area 1. The area 51 is located adjacent to the milking station 9 and is large enough to house a plurality of cows. In the embodiment of Fig. 1 the area 51 is enclosed by a fence or similar 52 provided with an entry gate 53, through which cows may enter the area 51 from the resting area 47. The enclosed are 51 is arranged between the resting area 47 and the milking station, such that cows moving from the resting area 47 to the feeding area 46 have to pass the area 51 and the milking.station 9 in turn. In Fig. 1 there are four cows 55 in the area 51, and one cow in the selection box 2 of the milking station 9.

In vicinity of the entry gate 53 is arranged a cow detection device 54 for detection of cows entering the area 51, which device 54 is connected to the central processing and control device 32 for transferring information of the detection thereto. The detector device 54 may be a simple counter counting the cows passing the entry gate 53 or it may be a more sophisticated identification device for identifying each cow entering through the gate 53.

Further, the entry gate 53 may be a two-way gate allowing cows to use the gate as an exit to leave the area 51 without visiting the milking station 9. In such a case the detector device 54 has to be capable of detecting also the cows exiting the area 51 through the gate 53 in order to keep track of the number of cows in the area 51, and optionally their identity. Alternatively, a separate exit gate is provided (not illustrated).

A cow being identified by the cow identification device 20 as visiting the milking station 9 can now be admitted to be milked automatically by the automatic milking machine 14 depending on the detected number of cows in the area 51 adjacent to the milking station 9.

By such provisions the milking station 9 may be used for milking of a cow almost qualified for milking, which visits the milking station 9, provided that no cow is present in the area 51 adjacent to the milking station 9, and a higher utilization of the milking station is obtained.

Similarly, a cow just qualified for milking, which visits the milking station 9, may be refused to be milked provided that there are a lot of cows highly qualified for milking present in the area 51, in order to quickly set free the capacity of the milking station 9 to be used for a cow having a higher milking priority. Here is assumed that at least one of the many cows highly qualified for milking visits the milking station 9 soon. This may be ensured by means of enticing the cows to visit the milking station 9 by means of feed or other enticing means known in the art.

A few inventive milking decision algorithms, which may be implemented in the Fig. 1 arrangement for automatically milking cows, are described below. Algorithms I-II may be implemented irrespective of the detection device 54 is an identification device or a counter, algorithms III-V are based on that the cows in the area 51 are identified, and algorithms VI-VII are preferably implemented when the detection device 54 is a cow counting device.
I. A cow identified when presenting itself at the milking station 9 is admitted to be milked automatically by the automatic milking machine 14 irrespective of its milking priority only if no presence of cows is detected in the area 51 adjacent to the milking station 9.
II. A cow identified when presenting itself at the milking station . 9 is admitted to be milked automatically by the automatic milking machine 14 only if
   a) the milking priority of the cow is higher than a first threshold and no presence of cows is detected in the area 51 adjacent to the milking station 9; or
   b) the milking priority of the cow is higher than a second threshold and presence of cows is detected in the area 51 adjacent to the milking station.
      The second threshold is the original threshold if the present invention would not have been implemented. The first threshold is lower than the second threshold to allow more cows to be milked when no other cows are present in the area 51.
III. A cow identified when presenting itself at the milking station 9 is admitted to be milked automatically by the automatic milking machine 14 only if
   a) the milking priority of the cow is higher than a first threshold; or
   b) the milking priority of the cow is higher than a second threshold and no presence of cows, having a milking priority higher than the milking priority of the cow, is identified in the area 51 adjacent to the milking station 9.
      The first threshold is the original threshold if the present invention would not have been implemented. The first threshold is higher than the second threshold to allow more cows to be milked when no other cows with higher milking priority are present in the area 51.
IV. A cow identified when presenting itself at the milking station 9 is admitted to be milked automatically by the automatic milking machine 14 only if
   a) the milking priority of the cow is higher than a first threshold; or
   b) the milking priority of the cow is higher than a second threshold and no presence of cows, having a milking priority higher than a third threshold, is identified in the area 51 adjacent to the milking station 9.
      The first and third thresholds are higher than the second threshold. This is a generalization of scheme III.
V. A cow identified when presenting itself at the milking station 9 is admitted to be milked automatically by the automatic milking machine 14 only if
   a) the milking priority of the cow is higher than a first threshold; or
   b) the milking priority of the cow is higher than a second threshold and not more than one cow, having a milking priority higher than the milking priority of the cow, is identified in the area 51 adjacent to the milking station 9.
      The first threshold is higher than the second threshold to allow more cows to be milked when no or only one other cow with higher milking priority are present in the area 51. It is here assumed that when only one such cow is present in the area 51 it is not very probable that this single cow will present itself at the milking station within the time take to milk the cow in the milking station 9.
VI. A cow identified when presenting itself at the milking station 9 is admitted to be milked automatically by the automatic milking machine 14 only if
   a) the milking priority of the cow is higher than a first threshold; or
   b) the milking priority of the cow is higher than a second threshold and not more than X cows are present in the area 51 adjacent to the milking station 9, where the first threshold is higher than the second threshold and X is a positive integer.
      The figure X may be determined from analysis of the total number of cows in the area 1 and their respective milking priorities to obtain a certain probability that there are no highly qualified cows for milking in the area 51 that should be milked instead.
VII. A cow identified when presenting itself at the milking station 9 is admitted to be milked automatically by the automatic milking machine 14 only if
   a) the milking priority of the cow is higher than a first threshold; or
   b) the milking priority of the cow is higher than a second threshold and there is a probability of at least Pₘᵢₙ that not more than X cows present in the area 51 adjacent to the milking station have a respective milking priority higher than a third threshold. The probability is calculated from the number of the cows present in the area 1, their respective milking priorities and the number of those cows present in the area 51 adjacent to the milking station 9. Pₘᵢₙ is a constant between zero and one, the first and third thresholds are higher than the second threshold, and X is a non-negative integer.
      The thresholds, the number of cows X and the probability Pₘᵢₙ may be selected or adjusted to fit the particular arrangement.

The algorithms are preferably implemented in the central processing and control device 32, which thus is arranged for receiving an identification of the cow visiting the milking station 9, for retrieving the milking priority of that cow, for receiving information regarding the number of cows in the area 51, and for controlling the automatic milking machine to milk the cow depending on its milking priority, and depending on the detected number of cows in the area 51.

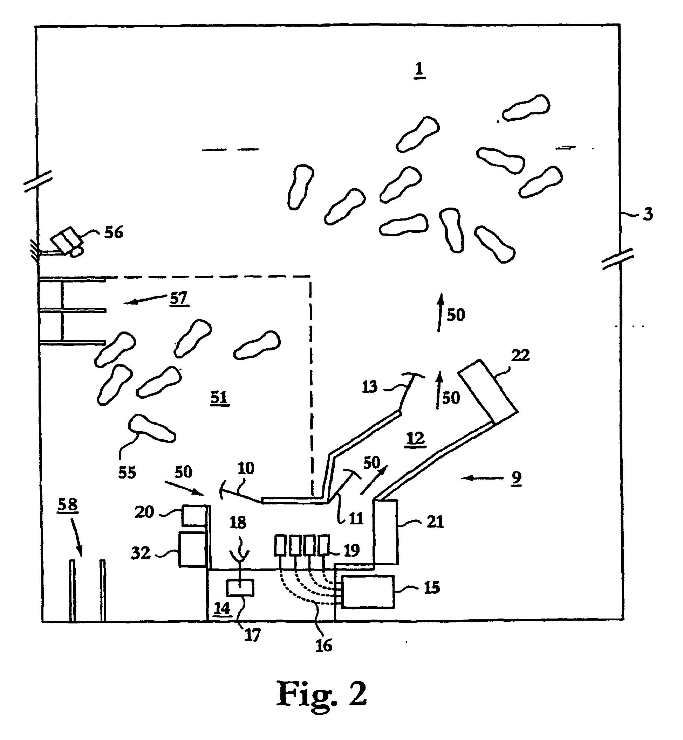

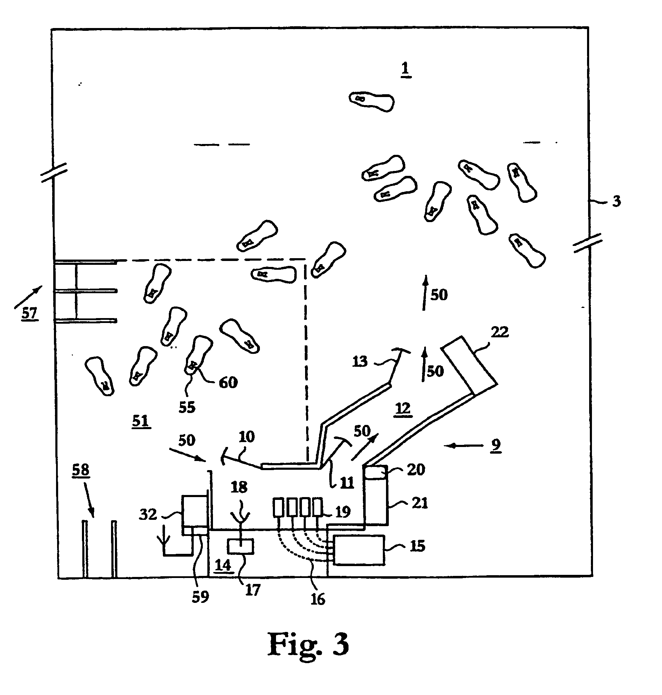

In each of Figs. 2 and 3 is illustrated an area for housing a herd of cows including arrangements for automatically milking the cows according to a respective one of two alternative embodiments of present invention.

Each of the Figs. 2 and 3 areas, denoted 1, houses a milking station 9, similar to the one of Fig. 1, but without the selection box in front of the entry gate 10. In the Fig. 2 embodiment the cow identification device 20 is provided in front of the entry gate 10, whereas in the Fig. 3 embodiment the cow identification device 20 is located in the front end of the milking station 9 close to the first feeding device 21.

A cow identified and not admitted to be milked by the automatic milking machine 14 is, in the Fig. 2 embodiment, lead through the milking station 9 without being milked and exits through the gate 13, or is just not admitted to enter through the entry gate 10, whereas such a cow, in the Fig. 3 embodiment, has to be led through the milking station 9 without being milked.

An advantage of leading a cow not admitted to be milked through the milking station instead of denying it to enter the milking station is that there is no risk that a highly ranked and thus dominant cow blocks the entry to the milking station and refuses to allow other cows to pass through.

An advantage of identifying a cow inside the milking station instead of at the entry to the milking station is to reduce the risk of erroneously identifying a cow entering the milking station, which could possibly happen if one cow is identified at the entry while another passes by and enters the milking station 9 without being identified.

Further, the areas 51 located adjacent the respective milking station 9 are not enclosed by a fence or similar. Hence, the cows are allowed to walk about freely in and out of the area 51. However, the area 51 is defined as comprising the region outside the entry gate 10 to the milking station, but not the region outside the exit gate 13 of the milking station (or the exit gate 11 if the exit space 12 is dispensed with). The area 51 may include a feeding stall or device 57 and a resting stall 58.

The cow detection device 54 for detection of cows entering the area 51 as illustrated in Fig. 1 is exchanged for a respective alternative device for detecting presence of cows within the respective area 51. In Fig. 2 is illustrated an image capturing device in the form of a CCD camera 56 (which is connected to the central processing and control device 32) for detecting cows present in the area 51 and in Fig. 3 is illustrated a radio receiver 59 connected to the central processing and control device 32. The receiver 59 is capable of detecting the cows within the area 51 by means of individual radio transmitters 60 provided on each cow 55. To detect the presence of cows *within* the area 51, the transmitter 60 is equipped with some kind of position sensor, or the signal strength is so as to only reach the receiver from within a distance within the area 51, or the area 1 outside the are 51 may be equipped with a radio interference arrangement (not illustrated).

Preferably, the camera 56 is by means of image processing software in the central processing and control device 32 operating as a cow counter for retrieving the number of cows in the area 51, whereas the radio transmission system 59, 60 of Fig. 3 operates as a cow identification device. However, the opposite may hold true as well: the camera can be used for identification of the cows in the area 51, whereas the radio transmitters may be used as cow counters.

The algorithms depicted above with reference to Fig. 1 are equally applicable to the Figs. 2 and 3 embodiments.

## Claims

1. A method of automatically milking animals, which are allowed to move in an area (1) intended therefore and to visit individually a milking station (9) including an automatic milking machine (14) and an animal identification device (20), wherein each of said animals is given a milking priority and wherein each of said animals visiting the milking station is identified and is admitted to be milked automatically by said automatic milking machine depending on its milking priority, **characterized by** the steps of:
- counting the number of animals in a portion (51) of said area, in which said milking animals are allowed to move, by means of an animal counting detector (56), said portion being capable of housing a plurality of said animals and being located adjacent to said milking station;
- identifying an animal, which presents itself at the milking station, by means of said animal identification device; and
- admitting said identified animal to be milked automatically by said automatic milking machine depending on the detected number of animals in said portion located adjacent to said milking station.

2. The method of claim 1 wherein said portion located adjacent to said milking station is substantially surrounded by enclosure means (52) and is provided with an entry (53), which said animals are allowed to enter, while being counted by said animal counting detector.

3. The method of claim 2 wherein animals in said portion located adjacent to said milking station are allowed to leave said portion through an exit, while being counted by said animal counting detector.

4. The method of claim 2 or 3 wherein animals in said portion located adjacent to said milking station are allowed to leave said portion by means of visiting said milking station.

5. The method of any of claims 1-4 wherein said portion located adjacent to said milking station includes at least one feeding device (57) or at least one resting area (58).

6. The method of any of claims 1-5 wherein said animal identified when presenting itself at the milking station is admitted to be milked automatically by said automatic milking machine irrespective of its milking priority only if no presence of animals is detected in the portion located adjacent to said milking station.

7. The method of any of claims 1-5 wherein said animal identified when presenting itself at the milking station is admitted to be milked automatically by said automatic milking machine only if the milking priority of said animal is higher than a first threshold and no presence of animals is detected in the portion located adjacent to said milking station; or only if the milking priority of said animal is higher than a second threshold and presence of animals is detected in the portion located adjacent to said milking station, said first threshold being lower than said second threshold.

8. The method of any of claims 1-5 wherein said animal counting detector is an animal identification device (54; 59-60) for identification of each animal present in said portion located adjacent to said milking station.

9. The method of claim 8 wherein said animal identified when presenting itself at the milking station is admitted to be milked automatically by said automatic milking machine only if the milking priority of said animal is higher than a first threshold; or only if the milking priority of said animal is higher than a second threshold and no presence of animals, having a milking priority higher than the milking priority of said animal, is identified in the portion located adjacent to said milking station, said first threshold being higher than said second threshold.

10. The method of claim 8 wherein said animal identified when presenting itself at the milking station is admitted to be milked automatically by said automatic milking machine only if the milking priority of said animal is higher than a first threshold; or only if the milking priority of said animal is higher than a second threshold and no presence of animals, having a milking priority higher than a third threshold, is identified in the portion located adjacent to said milking station, said first and third thresholds being higher than said second threshold.

11. The method of claim 8 wherein said animal identified when presenting itself at the milking station is admitted to be milked automatically by said automatic milking machine only if the milking priority of said animal is higher than a first threshold; or only if the milking priority of said animal is higher than a second threshold and not more than one animal, having a milking priority higher than the milking priority of said animal, is identified in the portion located adjacent to said milking station, said first threshold being higher than said second threshold.

12. The method of any of claims 1-5 wherein said animal identified when presenting itself at the milking station is admitted to be milked automatically by said automatic milking machine only if the milking priority of said animal is higher than a first threshold; or only if the milking priority of said animal is higher than a second threshold and not more than X animals are present in said portion located adjacent to said milking station, said first threshold being higher than said second threshold and X being a positive integer.

13. The method of claim 12 wherein said animal identified when presenting itself at the milking station is admitted to be milked automatically by said automatic milking machine only if the milking priority of said animal is higher than a first threshold; or only if the milking priority of said animal is higher than a second threshold and there is a probability of at least Pₘᵢₙ that not more than X animals present in said portion located adjacent to said milking station have a respective milking priority higher than a third threshold, the probability being calculated from the number of the animals present in said area, their respective milking priorities and the number of those animals present in said portion located adjacent to said milking station, Pₘᵢₙ being a constant between zero and one, said first and thresholds being higher than said second threshold, and X being a non-negative integer.

14. The method of any of claims 1-13 wherein each of said milking animals is given a milking priority, which depends on the time elapsed since the animal was milked last, and optionally on any of the lactation period of the animal; the milk yield per unit time of the animal; the health of the animal; the udder health of the animal; the cell count value of the milk produced by the animal; the udder filling level of the animal; whether the animal is giving suck to a suckling animal; the pattern of behavior of the animal; the activity of the animal; and the feed consumption of the animal.

15. The method of claim 14 wherein the milking priority of each of said milking animals is updated repeatedly.

16. An arrangement for managing milking animals, each of which being given a milking priority, comprising:
- an area (1), in which the animals are allowed to move;
- a milking station (9), which the animals are capable to visit individually, the milking station including an animal identification device (20) for identifying an animal presenting itself at the milking station (9), and an automatic milking machine (14) capable of automatically milking said identified animal; and
- a control device (32) for receiving an identification of said animal presenting itself at the milking station (9), for retrieving the milking priority of said identified animal, and for controlling said automatic milking machine to milk said identified animal depending on its milking priority,
**characterized in**
- an animal counting detector (56) for counting the number of animals in a portion (51) of said area, in which said milking animals are allowed to move, said portion being capable of housing a plurality of said animals and being located adjacent to said milking station, wherein
- said control device is adapted to control said automatic milking machine to milk said identified animal depending on the detected number of animals in said portion located adjacent to said milking station.

17. The arrangement of claim 16 wherein said portion located adjacent to said milking station is substantially surrounded by enclosure means (52) and is provided with an entry (53), which said animals are allowed to enter, while being counted by said animal counting detector.

18. The arrangement of claim 17 wherein said portion located adjacent to said milking station is provided with an exit (53), through which animals in said portion located adjacent to said milking station can leave said portion, and wherein said animal counting detector is adapted to count such animals leaving said portion.

19. The arrangement of claim 17 or 18 wherein said milking station is capable of being visited by the animals from said portion located adjacent to said milking station, and wherein said milking station has an exit, which leads outside of said portion located adjacent to said milking station.

20. The arrangement of any of claims 16-19 wherein said portion located adjacent to said milking station includes at least one feeding device (57) or at least one resting area (58).

21. The arrangement of any of claims 16-20 wherein said control device is adapted to control said automatic milking machine to milk said animal identified when presenting itself at the milking station only if the milking priority of said animal is higher than a first threshold and no presence of animals is detected in the portion located adjacent to said milking station; or only if the milking priority of said animal is higher than a second threshold and presence of animals is detected in the portion located adjacent to said milking station, said first threshold being lower than said second threshold.

22. The arrangement of any of claims 16-20 wherein said animal counting detector is an animal identification device (54; 59-60) for identification of each animal present in said portion located adjacent to said milking station.

23. The arrangement of claim 22 wherein said control device is adapted to control said automatic milking machine to milk said animal identified when presenting itself at the milking station only if the milking priority of said animal is higher than a first threshold; or only if the milking priority of said animal is higher than a second threshold and no presence of animals, having a milking priority higher than a third threshold, is identified in the portion located adjacent to said milking station, said first and third thresholds being higher than or equal to said second threshold.

24. The arrangement of any of claims 16-20 wherein said control device is adapted to control said automatic milking machine to milk said animal identified when presenting itself at the milking station only if the milking priority of said animal is higher than a first threshold; or only if the milking priority of said animal is higher than a second threshold and there is a probability of at least Pₘᵢₙ that not more than X animals present in said portion located adjacent to said milking station have a respective milking priority higher than a third threshold, the probability being calculated from the number of the animals present in said area, their respective milking priorities and the number of those animals present in said portion located adjacent to said milking station, Pₘᵢₙ being a constant between zero and one, said first and third thresholds being higher than said second threshold, and X being a non-negative integer.

## Patentansprüche

1. Verfahren zum automatischen Melken von Tieren, die sich frei in einem dafür bestimmten Bereich (1) bewegen und einen Melkstand (9) individuell aufsuchen können, der eine automatische Melkmaschine (14) und eine Tier-Identifikationsvorrichtung (20) aufweist, wobei jedem der Tiere ein Melkrang zugeordnet wird und wobei jedes der Tiere, das den Melkstand aufsucht, identifiziert und zum automatischen Melken durch die automatische Melkmaschine in Abhängigkeit seines Melkranges zugelassen wird, **gekennzeichnet durch** die Schritte:
- Erfassen der Anzahl der Tiere, die in einem Teilbereich (51) des Bereiches anwesend sind, in dem die Milchtiere sich frei bewegen können, mittels eines Tier-Zähldetektors (54; 56; 59-60), wobei der Teilbereich eine Vielzahl der Tiere aufnehmen kann und angrenzend an dem Melkstand angeordnet wird;
- Identifizieren eines Tieres, das sich an dem Melkstand einfindet, mittels der Tier-Identifikationsvorrichtung; und
- Zulassen des identifizierten Tieres zum automatischen Melken durch die automatische Melkmaschine in Abhängigkeit von der erfassten Anzahl von Tieren in dem an dem Melkstand angrenzend angeordneten Teilbereich.

2. Verfahren nach Anspruch 1, bei dem der an dem Melkstand angrenzend angeordnete Teilbereich im Wesentlichen von Einfriedungselementen (52) umgeben wird und mit einem Einlass (53) versehen wird, durch den die Tiere eintreten können, während sie von dem Tier-Zähldetektor erfasst werden.

3. Verfahren nach Anspruch 2, bei dem Tiere in dem Teilbereich, der an dem Melkstand angrenzend angeordnet wird, diesen Teilbereich durch einen Auslass verlassen können, während sie von dem Tier-Zähldetektor erfasst werden.

4. Verfahren nach Anspruch 2 oder 3, bei dem Tiere in dem Teilbereich, der an dem Melkstand angrenzend angeordnet wird, diesen Teilbereich durch Aufsuchen des Melkstandes verlassen können.

5. Verfahren nach einem der Ansprüche 1 bis 4, bei dem der an dem Melkstand angrenzend angeordnete Teilbereich mindestens eine Fütterungsvorrichtung (57) oder mindestens einen Ruhebereich (58) aufweist.

6. Verfahren nach einem der Ansprüche 1 bis 5, bei dem das Tier, das identifiziert wird, wenn es sich an dem Melkstand einfindet, zum automatischen Melken durch die automatische Melkmaschine ohne Rücksicht auf ihren Melkrang nur zugelassen wird, wenn keine Anwesenheit von Tieren in dem an der Melkstation angrenzend angeordneten Teilbereich erfasst wird.

7. Verfahren nach einem der Ansprüche 1 bis 5, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist und keine Anwesenheit von Tieren in dem angrenzend an dem Melkstand angeordneten Teilbereich erfasst wird; oder nur dann, wenn der Melkrang des Tieres höher als ein zweiter Grenzwert ist und die Anwesenheit von Tieren in dem angrenzend an dem Melkstand angeordneten Teilbereich erfasst wird, wobei der erste Grenzwert niedriger als der zweite Grenzwert ist.

8. Verfahren nach einem der Ansprüche 1 bis 5, bei dem der Tier-Zähldetektor eine Tier-Identifikationsvorrichtung (54; 59-60) zum Identifizieren jedes Tieres ist, das in dem angrenzend an dem Melkstand angeordneten Teilbereich anwesend ist.

9. Verfahren nach Anspruch 8, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist; oder nur dann, wenn der Melkrang des Tieres höher als ein zweiter Grenzwert ist und keine Anwesenheit von Tieren in dem an dem Melkstand angrenzend angeordneten Teilbereich erkannt wird, die einen Melkrang haben, der höher als der Melkrang des Tieres ist, wobei der erste Grenzwert höher als der zweite Genzwert ist.

10. Verfahren nach Anspruch 8, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist; oder nur dann, wenn der Melkrang des Tieres höher als ein zweiter Grenzwert ist und keine Anwesenheit von Tieren in dem angrenzend an dem Melkstand angeordneten Teilbereich erkannt wird, die einen Melkrang haben, der höher als ein dritter Grenzwert ist, wobei der erste und der dritte Grenzwert höher als der zweite Grenzwert sind.

11. Verfahren nach Anspruch 8, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist; oder nur dann, wenn der Melkrang des Tieres höher als ein zweiter Grenzwert ist und nicht mehr als ein Tier in dem an dem Melkstand angrenzend angeordneten Teilbereich erkannt wird, das einen Melkrang hat, der höher als der Melkrang des Tieres ist, wobei der erste Grenzwert höher als der zweite Grenzwert ist.

12. Verfahren nach einem der Ansprüche 1 bis 5, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist; oder nur dann, wenn der Melkrang des Tieres höher als ein zweiter Grenzwert ist und nicht mehr als X Tiere in dem angrenzend an dem Melkstand angeordneten Teilbereich anwesend sind, wobei der erste Grenzwert höher als der zweite Grenzwert ist und X eine positive ganze Zahl ist.

13. Verfahren nach Anspruch 12, bei dem das Tier, das identifiziert wird, wenn es sich an dem Melkstand einfindet, zum automatischen Melken durch die automatische Melkmaschine nur zugelassen wird, wenn der Melkrang des Tieres höher als ein erster Grenzwert ist; oder nur dann, wenn der Melkrang des Tieres höher als ein zweiter Grenzwert ist und eine Wahrscheinlichkeit von mindestens Pₘᵢₙ besteht, dass nicht mehr als X Tiere, die in dem angrenzend an die Melkstation angeordneten Teilbereich anwesend sind, einen entsprechenden Melkrang haben, der höher als ein dritter Grenzwert ist, wobei die Wahrscheinlichkeit aus der Anzahl der Tiere, die in dem Bereich anwesend sind, deren entsprechenden Melkrängen und der Anzahl der Tiere, die in dem angrenzend an den Melkstand angeordneten Teilbereich anwesend sind, berechnet wird, und wobei Pₘᵢₙ eine Konstante zwischen Null und Eins ist, der erste und der dritte Grenzwert höher als der zweite Grenzwert sind und X eine nicht negative ganze Zahl ist.

14. Verfahren nach einem der Ansprüche 1 bis 13, bei dem jedem Milchtier ein Melkrang zugeordnet wird, der von der verstrichenen Zeit abhängt, seitdem das Tier zuletzt gemolken wurde, und optional von der Laktationsperiode des Tieres, der Milchausbeute pro Zeiteinheit des Tieres; der Gesundheit des Tieres; dem Befinden des Tiereuters, dem Zellzahlenwert der von dem Tier erzeugten Milch, dem Euterfüllstand des Tieres, davon, ob das Tier ein Jungtier säugt oder nicht; dem Verhaltensmuster des Tieres, der Aktivität des Tieres und dem Futterverbrauch des Tieres abhängt.

15. Verfahren nach Anspruch 14, bei dem der Melkrang jedes der Milchtiere wiederholt aktualisiert wird.

16. Einrichtung für die Milchtierbewirtschaftung, wobei jedem Milchtier ein Melkrang zugeordnet ist, mit:
- einem Bereich (1), in dem die Tiere sich bewegen können;
- einem Melkstand (9), den die Tiere einzeln aufsuchen können, wobei der Melkstand eine Tier-Identifikationsvorrichtung (20) zum Identifizieren eines sich an dem Melkstand (9) einfindenden Tieres und eine automatische Melkmaschine (14) aufweist, die das identifizierte Tier automatisch Melken kann; und
- eine Steuerungsvorrichtung (32) zum Empfangen einer Identifikation des sich an dem Melkstand (9) einfindenden Tieres, zum Abrufen des Melkranges des identifizierten Tieres und zum Steuern der automatischen Melkmaschine, um das identifizierte Tier in Abhängigkeit von seinem Melkrang zu melken,
**gekennzeichnet durch**
- einen Tier-Zähldetektor (56) zum Erfassen der Anzahl von Tieren in einem Teilbereich (51) des Bereiches, in dem sich die Milchtiere bewegen können, und der Teilbereich eine Vielzahl der Tiere unterbringen kann und angrenzend an dem Melkstand angeordnet ist, wobei
- die Steuerungsvorrichtung angepasst ist, um die automatische Melkmaschine zum Melken des identifizierten Tieres abhängig von der erfassten Anzahl von Tieren in dem angrenzend an den Melkstand angeordneten Teilbereich zu steuern.

17. Einrichtung nach Anspruch 16, bei der der angrenzend an den Melkstand angeordnete Teilbereich im Wesentlichen von Einfriedungselementen (52) umgeben ist und mit einem Einlass (53) versehen ist, durch den die Tiere eintreten können, während sie durch den Tier-Zähldetektor erfasst werden.

18. Einrichtung nach Anspruch 17, bei der der angrenzend an den Melkstand angeordnete Teilbereich mit einem Auslass (53) versehen ist, durch den Tiere in dem angrenzend an den Melkstand angeordneten Teilbereich diesen Teilbereich verlassen können, und wobei der Tier-Zähldetektor angepasst ist, um derartige Tiere zu erfassen, die den Teilbereich verlassen.

19. Einrichtung nach Anspruch 17 oder 18, bei der der Melkstand von den Tieren aus dem angrenzend an den Melkstand angeordneten Teilbereich aufgesucht werden kann, und wobei der Melkstand einen Auslass hat, der aus dem angrenzend an den Melkstand angeordneten Teilbereich nach außen führt.

20. Einrichtung nach einem der Ansprüche 16 bis 19, bei der der angrenzend an den Melkstand angeordnete Teilbereich mindestens eine Fütterungsvorrichtung (57) oder mindestens einen Ruhebereich (58) aufweist.

21. Einrichtung nach einem der Ansprüche 16 bis 20, bei der die Steuerungsvorrichtung angepasst ist, um die automatische Melkmaschine zu steuern, damit das Tier, das identifiziert wird, wenn es sich an dem Melkstand einfindet, nur dann gemolken wird, wenn der Melkrang des Tieres höher als ein erster Grenzwert ist und keine Anwesenheit von Tieren in dem angrenzend an den Melkstand angeordneten Teilbereich erfasst ist; oder nur dann, wenn der Melkrang des Tieres höher als ein zweiter Grenzwert ist und die Anwesenheit von Tieren in dem angrenzend an den Melkstand angeordneten Teilbereich erfasst ist, wobei der erste Grenzwert niedriger als der zweite Grenzwert ist.

22. Einrichtung nach einem der Ansprüche 16 bis 20, bei der der Tier - Zähldetektor eine Tier-Identifikationsvorrichtung (54; 59-60) zum Identifizieren eines jeden Tieres ist, das in dem angrenzend an den Melkstand angeordneten Teilbereich anwesend ist.

23. Einrichtung nach Anspruch 22, bei der die Steuerungsvorrichtung angepasst ist, um die automatische Melkmaschine zu steuern, damit das Tier, das identifiziert wird, wenn es sich an dem Melkstand einfindet, nur dann gemolken wird, wenn der Melkrang des Tieres höher als ein erster Grenzwert ist; oder nur dann, wenn der Melkrang des Tieres höher als ein zweiter Grenzwert ist und keine Anwesenheit von Tieren mit einem Melkrang, der höher als ein dritter Grenzwert ist, in dem angrenzend an den Melkstand angeordneten Teilbereich erkannt ist, wobei der erste und der dritte Grenzwert höher als oder gleich wie der zweite Grenzwert ist.

24. Einrichtung nach einem der Ansprüche 16 bis 20, bei der die Steuerungsvorrichtung angepasst ist, um die automatische Melkmaschine zu steuern, damit das Tier, das identifiziert wird, wenn es sich an dem Melkstand einfindet, nur dann gemolken wird, wenn der Melkrang des Tieres höher als ein erster Grenzwert ist; oder nur dann, wenn der Melkrang des Tieres höher als ein zweiter Grenzwert ist und eine Wahrscheinlichkeit von mindestens Pₘᵢₙ besteht, dass nicht mehr als X Tiere, die in dem angrenzend an den Melkstand angeordneten Teilbereich anwesend sind, einen entsprechenden Melkrang haben, der höher als ein dritter Grenzwert ist, wobei die Wahrscheinlichkeit aus der Anzahl der in dem Bereich anwesenden Tiere, deren entsprechenden Melkrängen und der Anzahl der Tiere, die in dem angrenzend an den Melkstand angeordneten Teilbereich anwesend sind, berechnet wird, wobei Pₘᵢₙ eine Konstante zwischen Null und Eins ist, der erste und der dritte Grenzwert höher als der zweite Grenzwert und X eine nicht negative ganze Zahl ist.

## Revendications

1. Procédé de traite automatique d'animaux, qui sont autorisés à se déplacer dans une zone dédiée (1) et à venir individuellement à une station de traite (9) incluant une trayeuse automatique (14) et un dispositif d'identification d'animaux (20), chacun desdits animaux recevant une priorité de traite et chacun desdits animaux qui vient à la station de traite étant identifié et étant admis à être trait automatiquement par ladite trayeuse automatique selon sa priorité de traite, **caractérisé par** les étapes consistant à :
- compter le nombre d'animaux dans une portion (51) de ladite zone, dans laquelle lesdits animaux à traire sont autorisés à se déplacer, au moyen d'un détecteur de comptage d'animaux (56), ladite portion pouvant abriter une pluralité desdits animaux et étant placée près de ladite station de traite ;
- identifier un animal, qui se présente à la station de traite, au moyen dudit dispositif d'identification d'animaux ; et
- admettre ledit animal identifié à la traite automatique par ladite trayeuse automatique en fonction du nombre d'animaux détectés dans ladite portion située près de ladite station de traite.

2. Procédé selon la revendication 1, dans lequel ladite portion située près de ladite station de traite est sensiblement entourée d'un moyen formant enclos (52) et est dotée d'une entrée (53), par laquelle lesdits animaux sont autorisés à entrer, tout en étant comptés par ledit détecteur de comptage d'animaux.

3. Procédé selon la revendication 2, dans lequel les animaux dans ladite portion située près de ladite station de traite sont autorisés à quitter ladite portion par une sortie, tout en étant comptés par ledit détecteur de comptage d'animaux.

4. Procédé selon la revendication 2 ou 3, dans lequel les animaux dans ladite portion située près de ladite station de traite sont autorisés à quitter ladite portion par les moyens pour venir à ladite station de traite.

5. Procédé selon l'une quelconque des revendications 1 à 4, dans lequel ladite portion placée près de ladite station de traite inclut au moins un dispositif d'alimentation (57) ou au moins une zone de repos (58).

6. Procédé selon l'une quelconque des revendications 1 à 5, dans lequel ledit animal identifié lorsqu'il se présente à la station de traite est admis à la traite automatique par ladite trayeuse automatique quelle que soit sa priorité de traite seulement si aucune présence d'animal n'est détectée dans la portion située près de ladite station de traite.

7. Procédé selon l'une quelconque des revendications 1 à 5, dans lequel ledit animal identifié lorsqu'il se présente à la station de traite est admis à la traite automatique par ladite trayeuse automatique seulement si la priorité de traite dudit animal est supérieure à un premier seuil et si aucune présence d'animaux n'est détectée dans la portion située près de la station de traite ; ou seulement si la priorité de traite dudit animal est supérieure à un deuxième seuil et si la présence d'animaux est détectée dans la portion située près de ladite station de traite, ledit premier seuil étant inférieur audit deuxième seuil.

8. Procédé selon l'une quelconque des revendications 1 à 5, dans lequel ledit détecteur de comptage d'animaux est un dispositif d'identification d'animaux (54 ; 59 à 60) pour l'identification de chaque animal présent dans ladite portion située près de ladite station de traite.

9. Procédé selon la revendication 8, dans lequel ledit animal identifié lorsqu'il se présente à la station de traite est admis à la traite automatique par ladite trayeuse automatique seulement si la priorité de traite dudit animal est supérieure à un premier seuil ; ou seulement si la priorité de traite dudit animal est supérieure à un deuxième seuil et si aucune présence d'animaux, de priorité de traite supérieure à la priorité de traite dudit animal, n'est identifiée dans la portion située près de ladite station de traite, ledit premier seuil étant supérieur audit deuxième seuil.

10. Procédé selon la revendication 8, dans lequel ledit animal identifié lorsqu'il se présente à la station de traite est admis à la traite automatique par ladite trayeuse automatique seulement si la priorité de traite dudit animal est supérieure à un premier seuil ; ou seulement si la priorité de traite dudit animal est supérieure à un deuxième seuil et si aucune présence d'animaux, de priorité de traite supérieure à un troisième seuil, n'est identifiée dans la portion située près de ladite station de traite, lesdits premier et troisième seuils étant supérieurs audit deuxième seuil.

11. Procédé selon la revendication 8, dans lequel ledit animal identifié lorsqu'il se présente à la station de traite est admis à la traite automatique par ladite trayeuse automatique seulement si la priorité de traite dudit animal est supérieure à un premier seuil ; ou seulement si la priorité de traite dudit animal est supérieure à un deuxième seuil et si on n'identifie pas plus d'un animal, de priorité de traite supérieure à la priorité de traite dudit animal, dans la portion située près de ladite portion de traite, ledit premier seuil étant supérieur audit deuxième seuil.

12. Procédé selon l'une quelconque des revendications 1 à 5, dans lequel ledit animal identifié lorsqu'il se présente à la station de traite est admis à la traite automatique par ladite trayeuse automatique seulement si la priorité de traite dudit animal est supérieure à un premier seuil ; ou seulement si la priorité de traite dudit animal est supérieure à un deuxième seuil et s'il n'y a pas plus de X animaux dans ladite portion située près de ladite station de traite, ledit premier seuil étant supérieur audit deuxième seuil et X étant un entier positif.

13. Procédé selon la revendication 12, dans lequel ledit animal identifié lorsqu'il se présente à la station de traite est admis à la traite automatique par ladite trayeuse automatique seulement si la priorité de traite dudit animal est supérieure à un premier seuil ; ou seulement si la priorité de traite dudit animal est supérieure à un deuxième seuil et s'il y a une probabilité d'au moins Pₘᵢₙ qu'il n'y a pas plus de X animaux présents dans ladite portion située près de ladite station de traite ayant respectivement une priorité de traite supérieure à un troisième seuil, la probabilité étant calculée à partir du nombre d'animaux présents dans ladite zone, de leur priorité de traite respective et du nombre de ces animaux présents dans ladite portion située près de ladite station de traite, Pₘᵢₙ étant un nombre constant compris entre 0 et 1, lesdits premier et troisième seuils étant supérieurs audit deuxième seuil, et X étant un entier non négatif.

14. Procédé selon l'une quelconque des revendications 1 à 13, dans lequel chacun desdits animaux à traire reçoit une priorité de traite, qui dépend du temps écoulé depuis la dernière traite de l'animal, et en option de n'importe lesquels des éléments suivants : la période de lactation de l'animal, du rendement en lait de l'animal par unité de temps, de la santé de l'animal, de la santé du pis de l'animal, de la valeur de comptage de cellules du lait produit par l'animal, du niveau de remplissage de pis de l'animal, si l'animal allaite un animal allaité, du modèle de comportement de l'animal, de l'activité de l'animal, de la consommation d'aliment de l'animal.

15. Procédé selon la revendication 14, dans lequel la priorité de traite de chacun des animaux à traire est mise à jour régulièrement.

16. Système de gestion d'animaux à traire, recevant chacun une priorité de traite, lequel système comprend :
- une zone (1), dans lequel les animaux sont autorisés à se déplacer ;
- une station de traite (9), que les animaux peuvent visiter individuellement, la station de traite incluant un dispositif d'identification d'animaux (20) pour identifier un animal se présentant à la station de traite (20), et une trayeuse automatique (14) capable de traire automatiquement ledit animal identifié ; et
- un dispositif de commande (32) pour recevoir une identification dudit animal se présentant à la station de traite (9), pour récupérer la priorité de traite dudit animal identifié, et pour commander à ladite trayeuse automatique de traire ledit animal identifié en fonction de sa priorité de traite,
**caractérisé par**
- un détecteur de comptage d'animaux (56) pour compter le nombre d'animaux dans une portion (51) de ladite zone, dans laquelle lesdits animaux à traire sont autorisés à se déplacer, ladite portion étant capable d'abriter une pluralité d'animaux et étant placée près de ladite station de traite,
- ledit dispositif de commande étant adapté pour commander ladite trayeuse automatique de traire ledit animal identifié en fonction du nombre d'animaux détectés dans ladite portion située près de la station de traite.

17. Système selon la revendication 16, dans lequel ladite portion située près de ladite station de traite est sensiblement entourée par des moyens formant enclos (52) et est dotée d'une entrée (53), que lesdits animaux sont autorisés à entrer, tout en étant comptés par ledit détecteur de comptage d'animaux.

18. Système selon la revendication 17, dans lequel ladite portion située près de ladite station de traite est dotée d'une sortie (53), par laquelle les animaux dans ladite portion située près de ladite station de traite peuvent quitter ladite portion, et dans lequel ledit détecteur de comptage d'animaux est adapté pour compter des animaux quittant ladite portion.

19. Système selon la revendication 17 ou 18, dans lequel ladite station de traite est apte à recevoir les animaux venant de ladite portion située près de la station de traite, et dans lequel ladite station de traite comporte une sortie, qui mène à l'extérieur de ladite portion située près de ladite station de traite.

20. Système selon l'une quelconque des revendications 16 à 19, dans lequel ladite portion située près de ladite station de traite inclut au moins un dispositif d'alimentation (57) et au moins une zone de repos (58).

21. Système selon l'une quelconque des revendications 16 à 20, dans lequel ledit dispositif de commande est adapté pour commander ladite trayeuse automatique de traire ledit animal identifié lorsqu'il se présente à la station de traite seulement si la priorité de traite dudit animal est supérieure à un premier seuil et si aucune présence d'animaux n'est détectée dans la portion située près de ladite station de traite ; ou seulement si la priorité de traite dudit animal est supérieure à un deuxième seuil et si la présence d'animaux est détectée dans la portion située près de ladite station de traite, ledit premier seuil étant inférieur audit deuxième seuil.

22. Système selon l'une quelconque des revendications 16 à 20, dans lequel ledit détecteur de comptage d'animaux est un dispositif d'identification d'animaux (54 ; 59 à 60) pour l'identification de chaque animal présent dans ladite portion située près de ladite station de traite.

23. Système selon la revendication 22, dans lequel ledit dispositif de commande est adapté pour commander ladite trayeuse automatique de traire ledit animal identifié lorsqu'il se présente à la station de traite seulement si la priorité de traite dudit animal est supérieure à un premier seuil ; ou seulement si la priorité de traite dudit animal est supérieure à un deuxième seuil et si aucune présence d'animaux, de priorité de traite supérieure à un troisième seuil, n'est identifiée dans la portion située près de ladite station de traite, lesdits premier et troisième seuils étant supérieurs ou égaux au deuxième seuil.

24. Système selon l'une quelconque des revendications 16 à 20, dans lequel ledit dispositif de commande est adapté pour commander ladite trayeuse automatique de traire ledit animal identifié lorsqu'il se présente à la station de traite seulement si la priorité de traite dudit animal est supérieure à un premier seuil ; ou seulement si la priorité de traite dudit animal est supérieure à un deuxième seuil et s'il y a une probabilité d'au moins Pₘᵢₙ qu'il n'y ait pas plus de X animaux présents dans ladite portion située près de ladite station de traite avec une priorité de traite respective supérieure à un troisième seuil, la probabilité étant calculée à partir du nombre d'animaux présents dans ladite zone, de leur priorité de traite respective et du nombre de ces animaux présents dans ladite portion située près de ladite station de traite, Pₘᵢₙ étant une constante comprise entre 0 et 1, lesdits premier et troisième seuils étant supérieurs au deuxième seuil et X étant un entier non négatif.
